(19) Europäisches Patentamt
European Patent Office
Office européen des brevets

(11) EP 2 662 428 A1

(12) EUROPEAN PATENT APPLICATION

(43) Date of publication:
**13.11.2013 Bulletin 2013/46**

(51) Int Cl.:
***C09J 7/02*** *(2006.01)* ***C09J 133/12*** *(2006.01)*

(21) Application number: **13166578.8**

(22) Date of filing: **06.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.05.2012 JP 2012108114**

(71) Applicant: **Nitto Denko Corporation**
**Ibaraki-shi,**
**Osaka 567-8680 (JP)**

(72) Inventors:
- **Niwa, Masahito**
  **Ibaraki-shi, Osaka 5678680 (JP)**
- **Miki, Kaori**
  **Ibaraki-shi, Osaka 5678680 (JP)**

(74) Representative: **Grünecker, Kinkeldey, Stockmair & Schwanhäusser**
**Leopoldstrasse 4**
**80802 München (DE)**

# (54) Pressure-sensitive adhesive sheet for metal surface protection

(57) The present invention provides a metal surface protective pressure-sensitive adhesive sheet comprising a substrate and an acrylic pressure-sensitive adhesive layer that comprises an acrylic polymer and a thermally expandable microsphere provided on at least one face of the substrate. The acrylic polymer is characterized by having a carboxylic acid equivalent weight of 0.0010 eq./g or less and an amine equivalent weight of 0.0050 eq./g to 0.0600 eq./g.

EP 2 662 428 A1

**Description**

CROSS-REFERENCE

The present application claims priority based on Japanese Patent Application No. 2012-108114 filed on May 10th, 2012, and the entire contents thereof is incorporated herein by reference.

BACKGROUND OF THE INVENTION

1. Field of the Invention

The present invention relates to a metal surface protective pressure-sensitive adhesive (PSA) sheet to protect surfaces of metal plates, with the sheet being sufficiently adhesive when adhered, readily removable with heat even after long-term storage, and also non-corrosive.

2. Description of the Related Art

Conventionally, manufacturing processes of metal plates for vehicles, processed metal parts, electronic components, etc., involve temporary joining and masking of various materials or protection of surfaces of metal plates and the like. Thus, a surface protective member used for these purposes needs to be easily removed from adherends after serving its intended purpose.

While such a need has been present, in the past, there has been disclosed a PSA sheet that can be removed with heating during manufacturing processes of ceramic sheets or electronic components (see Japanese Patent Application Publication No. H5-43851). However, as the modulus of elasticity is limited to a certain range that is suitable for thermal removability, it has been difficult to combine an adhesive strength suitable for various individual purposes (e.g., an adhesive strength desirably adjusted for each purpose) and a capability to allow easy removal as needed.

For example, with respect to a thermally removable PSA sheet using a PSA comprising a polymer that has in its structure a large fraction of structural components derived from a carboxyl group-containing monomer as typically exemplified by acrylic acid (see Japanese Patent Application Publication No. H6-306337), while the PSA sheet can readily produce highly dependable adhesion (i.e., adhesive strength and repulsion resistance), there has been a problem in terms of properties to allow easy removal as its adhesive strength turns significantly higher over time. Especially if it is used on a metallic adherend, it has not been able to produce easy removal to a satisfactory level, or it has caused problems such as corrosion of metal plates, and so on. Thus, there has been also a problem that it limits the choice of adherends.

As such, there has been a desire for a metal surface protective PSA sheet that exhibits good adhesion relative to metal plates combined with a capability to provide easy removal upon heating while being non-corrosive.

SUMMARY OF THE INVENTION

One objective of the present invention is to provide a metal surface protective PSA sheet that consistently exhibits a high adhesive strength to metal plates upon application, yet can be easily removed when it is to be peeled away from adherends while being non-corrosive.

After extensive investigations, the present inventors have discovered that according to a metal surface protective PSA sheet comprising an acrylic PSA layer that comprises an acrylic polytner having a carboxylic acid equivalent weight of 0.0010 eq./g or less and an amine equivalent weight of 0.0050 eq./g to 0.0600 eq./g and further comprising a thermally expandable microsphere, it is possible to obtain a metal surface protective PSA sheet that stays highly adhesive to metals while being adhered, yet can be easily peeled away when it needs to be removed from adherends while being non-corrosive; whereby the present invention has been made.

In other words, the present invention provides a metal surface protective PSA sheet comprising a substrate and an acrylic PSA layer comprising an acrylic polymer and a thermally expandable microsphere, with the PSA layer being provided on one face of the substrate, with the PSA sheet being characterized by the acrylic polymer having a carboxylic acid equivalent weight of 0.0010 eq./g or less and an amine equivalent weight of 0.0050 eq./g to 0.0600 eq./g.

In the metal surface protective PSA sheet, the thermally expandable microsphere content is preferably 10 parts by mass to 200 parts by mass relative to 100 parts by mass of the acrylic polymer.

It is preferable that the acrylic polymer is constituted with the following monomers (a1), (a2) and (a3) at proportions indicated below.

(a1) an alkyl (meth)acrylate monomer having an alkyl group with 4 to 12 carbon atoms and having a homopolymer

glass transition temperature below 0 °C; at a proportion of 40 mass% to 90 mass%.

(a2) a monomer having at least one nitrogen atom and one ethylenically unsaturated bond per molecule; at a proportion of 5 mass% to 40 mass%.

(a3) a monomer (excluding the monomer (a2)) having one ethylenically unsaturated bond per molecule and having a homopolymer glass transition temperature of 0 °C or above; at a proportion of 0 mass% to 40 mass%.

(the proportions indicate the fractions (mass%) of the respective monomers in the total amount (100 mass%) of monomers (a1), (a2) and (a3)).

In the acrylic polymer constituting the metal surface protective PSA sheet, the monomer (a2) is preferably at least one species selected from a group consisting of N,N-dimethylacrylamide, N-vinyl-2-pyrrolidone and N-vinyl-2-caprolactam.

In the acrylic polymer constituting the metal surface protective PSA sheet, it is preferable that the monomer (a3) is an (meth)acrylate monomer having a structure in which a (meth)acryloylox), group is bonded to a tertiary carbon atom and having a homopolymer glass transition temperature of 0 °C or above, or a (meth)acrylate monomer having a structure in which a (meth)acryloyloxy group is bonded to a carbon atom constituting a monocyclic or polycyclic aliphatic hydrocarbon ring and having a homopolymer glass transition temperature of 0 °C or above, with the monomer (a3) being more preferably at least one monomer selected from a group consisting oft-butyl (meth)acrylate and isoborny) (meth) acrylate.

The substrate constituting the metal surface protective PSA sheet is preferably a thermally shrinkable film that shrinks by 5 % or more at a temperature in a range of 70 °C to 180 °C.

The metal surface protective PSA sheet according to the present invention has the constitution described above; and therefore, it can maintain strong adhesion to metal plates (preferably metal steel plates) when adhered, yet can be easily removed when it is to be peeled away from adherends while being non-corrosive.

## DETAILED DESCRIPTION OF THE INVENTION

The metal surface protective PSA sheet according to the present invention comprises a substrate and an acrylic PSA layer that comprises an acrylic polymer and a thermally expandable microsphere, with the PSA layer being provided on one face of the substrate, with the PSA sheet being characterized by the acrylic polymer having a carboxylic acid equivalent weight of 0.0010 eq/g or less and an amine equivalent weight of 0.0050 eq/g to 0.0600 eq./g.

### (Acrylic PSA layer)

The metal surface protective PSA sheet according to the present invention comprises at least one acrylic PSA layer comprising at least an acrylic polymer and a thermally expandable microsphere.

The acrylic polymer content in the acrylic PSA layer is preferably 30 mass% or greater (e.g., 30 mass% to 90 mass%), more preferably 50 mass% or greater (e.g., 50 mass% to 85 mass%), or more preferably 60 mass% or greater (e.g., 60 mass% to 80 mass%), relative to the total amount (100 mass%) of the acrylic PSA layer. When the acrylic polymer content is below 30 mass%, it may become less capable of forming a PSA layer, resulting in poorer adhesion to metal surfaces or decreased cohesive strength.

The acrylic PSA layer comprises a thermally expendable microsphere. The thermally expandable microsphere refers to a microsphere species whose volume expands with heat (typically when heated). A single species or a combination of two or more species of thermally expandable microsphere can be used.

Because the acrylic PSA layer contains a thermally expandable microsphere, when heated after having been adhered to an adherend such as a metal plate surface, thermal expansion of the microsphere will decrease the area of contact between the PSA layer and the adherend, whereby the PSA layer provides (i) a capability to effect easy reduction of the adhesive strength (removability, properties to allow easy removal) and (ii) releasability (separability) at the adhesion interface. In the present description, the features (i) and (ii) may be comprehensively referred to as "release properties"

While the thermally expandable microsphere is not particularly limited, a microencapsulated thermally expandable microsphere is preferable. Examples of such a microencapsulated thermally expandable microsphere include microspheres each comprising a flexible shell that encapsulates a substance capable ofeasily producing a gas by heat, with examples of such a substance including isobutane, propane, pentane and the like.

The shell of the thermally expandable microsphere is preferably formed of a thermoplastic substance, thermally melting substance, a substance that is explosive when thermally expanded, or the like. Examples of a substance constituting the shell of the thermally expandable microsphere include a vinylidene chloride-acrylonitiile copolymer, polyvinyl alcohol, polyvinyl butyral, polymethyl methacrylate, polyacrylonitrile, polyvinylidene chloride, polysulfone and the like. The thermally expandable microsphere can be produced by a commonly used method, such as a coacervation method, interfacial polymerization method, and other like methods.

As the thermally expandable microsphere, a commercial product can be used. Examples of a commercially available thermally expandable microsphere include trade names "MATSUMOTO MICROSPHERE F-30", "MATSUMOTO MICROSPHERE F-50", "MATSUMOTO MICROSPHERE F-80S" and "MATSUMOTO MICROSPHERE F-85" (available from Matsumoto Yushi-Seiyaku Co., Ltd.); trade name "EXPANCEL DU series" (available from Expancel Corporation); and the like. Among these, trade name "EXPANCEL 051 DU 40" (available from Expancel Corporation) is preferable.

While the average particle diameter of the thermally expandable microsphere is not particularly limited, in view of the dispersibility and capability to form a thin layer, it is preferably 1 μm to 80 μm, or more preferably 3 μm to 50 μm.

Further in view of reducing the adhesive strength efficiently with heating and adjusting the adhesive strength to metal surfaces described later, a preferable thermally expandable microsphere has a strength that allows 5 or more fold increase, particularly 10 or more fold increase in the volume without explosion. With use of a thermally expandable microsphere that explodes at a smaller fold increase in the volume (e.g., a thermally expandable microsphere that explodes at a smaller than 5-fold increase in the volume, etc.) or a unmicroencapsulated thermally expanding agent (thermally foaming agent), the adhesive strength cannot be efficiently reduced, whereby the adhesive strength to glass surfaces described later may not be obtained.

The fold increase in the volume can be determined by the following equation: Fold increase in volume = (volume of expanded microsphere)/(volume of unexpanded microsphere) wherein the expanded microsphere refers to the thermally expandable microsphere after heated and the unexpanded microsphere refers to the thermally expandable microsphere prior to heating.

While the thermally expandable microsphere content in the acrylic PSA layer is not particularly limited, it is preferably 10 parts by mass to 200 parts by mass, more preferably 20 parts by mass to 125 parts by mass, even more preferably 25 parts by mass to 100 parts by mass, or especially preferably 25 parts by mass to 80 parts by mass, relative to 100 parts by mass of the acrylic polymer. When the themally expandable microsphere content is 10 parts by mass or greater, good thermal releasability can be attained. A thermally expendable microsphere content of 200 parts by mass or less is preferable because it can produce good adhesion to metal surfaces without decreasing other adhesive properties.

In the present invention, the acrylic polymer is characterized by having a carboxylic acid equivalent weight of 0.0010 eq./g or less and an amine equivalent weight of 0.0050 eq/g to 0.0600 eq./g.

In the present invention, the carboxylic acid equivalent weight refers to an equivalent weight (eq./g) (weight fraction) of carboxylic acid groups (-COOH) contained in one gram of the acrylic polymer. For instance, when the carboxylic acids are of acrylic acid, it refers to a value obtained by multiplying the weight of acrylic acid present in one gram of the acrylic polymer by the weight fraction of the carboxylic acid groups in acrylic acid (i.e., 45 (molecular weight of -COOH)/72 (molecular weight of acrylic acid) = 0.625).

In the present invention, the amine equivalent weight refers to an equivalent weight (eq./g) (weight fraction) of nitrogen atoms (-N-) contained in one gram of the acrylic polymer. For instance, when the nitrogen atoms are of N-vinylcaprolactam (NVC), it refers to a value obtained by multiplying the weight of NVC present in one gram of the acrylic polymer by the weight fraction of the nitrogen atoms in NVC (i.e., 14 (atomic weight of N)/ 139 (molecular weight of NVC)=0.101).

In the present invention, with use of an acrylic polymer having a carboxylic acid equivalent weight of 0.0010 eq./g or less, the corrosivity to metal surfaces can be reduced. In other words, in a metal surface protective PSA sheet, in particular, an acid component contained in the acrylic polymer in the PSA layer is considered to cause corrosion of metal surface, with the acid component arising from a carboxylic acid. Thus, it is considered that with use of an acrylic polymer having a carboxylic acid equivalent weight of 0.0010 eq./g or less, corrosion of metal surfaces can be reduced. Therefore, in the metal surface protective PSA sheet according to the present invention, the acrylic polymer has a carboxylic acid equivalent weight of 0.0010 eq./g or less, preferably 0.0005 eq./g or less, or desirably 0.0000 eq./g.

In the present invention, with use of an acrylic polymer having an amine equivalent weight of 0.0050 eq./g to 0.0600 eq./g, good adhesion to metal surfaces can be attained. In other words, in a metal surface protective PSA sheet, because an acid cannot be added due to the corrosivity issue, it is difficult to increase the adhesive strength. In the present invention, regarding such an issue, addition of an amine-based component in place of an acid component allows the adhesive strength to increase while the occurrence of corrosion is suppressed. Thus, in the metal surface protective PSA sheet according to the present invention, the acrylic polymer has an amine equivalent weight of 0.0050 eq./g to 0.0600 eq./g, preferably 0.0100 eq./g to 0.0500 eq./g, or more preferably 0.0150 eq/g to 0.0400 eq./g. When the amine equivalent weight of the acrylic polymer is within a range of 0.0050 eq./g to 0.0600 eq./g, good adhesion to metal surfaces can be obtained without corrosivity to metal surfaces. On the other hand, when the amine equivalent weight of the acrylic polymer is less than 0.0050 eq./g, sufficient adhesion to metal surfaces may not be achieved. When the amine equivalent weight of the acrylic polymer exceeds 0.0600 eq./g, the glass transition temperature (Tg) turns out higher and the flexibility of the acrylic polymer may decrease, thereby degrading adhesion to metal surfaces.

In the present invention, the carboxylic acid equivalent weight and the amine equivalent weight of the acrylic

polymer can be suitably adjusted by modifying the composition and proportions of monomers that are constituents of the acrylic polymer. In other words, the carboxylic acid equivalent weight is adjusted by inclusion of a carboxyl group-containing monomer such as acrylic acid and methacrylic acid as a constituent. The amine equivalent weight is adjusted by inclusion of a nitrogen atom-containing monomer such as an acrylamide-based monomer as a constituent.

The acrylic polymer contained as the primary component in the acrylic PSA layer is constituted with an essential constituent being an alkyl (meth)acrylate having a straight or branched chain alkyl group. The acrylic polymer may be constituted with a copolymerizing monomer as a constituent along with an alkyl (meth)acrylate having a straight or branched chain alkyl group. A single species or a combination of two or more species of alkyl (meth)acrylate having a straight or branched chain alkyl group can be used. Furthermore, a single species or a combination of two or more species of copolymerizing monomer can be used. In other words, the acrylic polymer of the present invention is constituted with a monomer mixture comprising as an essential and primary component (typically at 50 mass% or greater) an alkyl (meth)acrylate having a straight or branched chain alkyl group and may further comprise a copolymerizing monomer as necessary, and can be obtained by polymerizing the monomer mixture. In the present description, (meth)acrylic acid means "acrylic acid" and/or "methacrylic acid", and other similar terms mean likewise.

In the metal surface protective PSA sheet according to the present invention, the acrylic polymer is preferably constituted with the following monomers (a1), (a2) and (a3) at proportions indicated below:

(a1) an alkyl (meth)acrylate having an alkyl group with 4 to 12 carbon atoms and having a homopolymer glass transition temperature below 0 °C; at a proportion of 40 mass% to 90 mass%.
(a2) a monomer having at least one nitrogen atom and one ethylenically unsaturated bond per molecule; at a proportion of 5 mass% to 40 mass%.
(a3) a monomer (excluding the monomer (a2)) having one ethylenically unsaturated bond per molecule and having a homopolymer glass transition temperature of 0 °C or above.

; at a proportion of 0 mass% to 40 mass%.
(the proportions indicate the fractions (mass%) of the respective monomers in the total amount (100 mass%) of monomers (a1), (a2) and (a3)).

With the acrylic polymer comprising monomers (a2) and (a3) as constituents, an acrylic PSA layer that comprises the acrylic polymer exhibits good adhesion to metal surfaces and good thermal releasability since the monomers (a2) and (a3) contribute to increase the adhesive strength or the cohesive strength.

The monomer (a2) has at least one nitrogen atom per molecule and is related to the amine equivalent weight of the acrylic polymer. By usage of the monomer (a2) as a constituent, the amine equivalent weight of the acrylic polymer can be adjusted.

Since the monomer (a3) increases the effect of the monomer (a2), the acrylic polymer preferably comprises the monomer (a3).

Since either the monomer (a2) or (a3) does not contain a functional group that interacts with a metal surface, the adhesive strength of the acrylic PSA layer is unlikely to increase over time. Thus, such an acrylic polymer is preferable for having thermal releasability unlikely to be degraded even after long-tenn storage.

In the present description, the "homopolymer glass transition temperature (Tg)" refers to "the glass transition temperature (Tg) of a homopolynner of the monomer", that is, the glass transition temperature (Tg) of a polymer formed of a single monomer species (or a monomer X). In particular, values are listed in "Polymer Handbook" (3rd edition, John Wiley & Sons, Inc., Year 1989). For the glass transition temperature(Tg) of a homopolymer not listed in the literature, for instance, can be used a value measured by the following method: To a reaction vessel equipped with a thermometer, stirrer, nitrogen inlet and reflux condenser, are placed 100 parts by mass of a monomer X, 0.2 part by mass of 2,2'-azobisisobutyronitrile and 200 parts by mass of ethyl acetate, and the resulting mixture is stirred under a nitrogen flow for one hour. Oxygen in the polymerization system is thus eliminated, and subsequently, the mixture is heated to 63 °C and the reaction is carried out for 10 hours. After this, the mixture is cooled to room temperature to obtain a homopolymer solution with 33 mass% solid content. Subsequently, this homopolymer solution is casted onto a release liner and allowed to dry to prepare a test sample (a homopolymer sheet) having a thickness of about 2 mm. Approximately 1 mg to 2 mg of the test sample is weighed out in an open aluminum cell, and using a temperature modulated DSC (trade name "Q-2000" available from TA Instruments), under a nitrogen flow at 50 mL/min, the behavior of the reversing heat flow (specific heat component) of the homopolymer is monitored while raising the temperature at a rate of 5 °C/min. Referring to JIS K7121, the homopolymer glass transition temperature (Tg) is determined as a temperature at which the reversing heat flow curve in the glass transition region intersects a straight line pitched at an equal distance in the vertical direction to a straight line extending along the baseline on the lower temperature side and a straight line extending along the baseline on the higher temperature side.

In the present description, the "ethylenically unsaturated bond" means a radically polymerizing carbon-carbon double bond. The group having an ethylenically unsaturated bond is not particularly limited while examples include vinyl

group, vinylidene group, allyl group, (meth)acryloyl group and the like. In the present description, "monofunctional" means having one ethylenically unsaturated bond per molecule while "polyfunctional" means having two or more ethylenically unsaturated bonds per molecule.

The acrylic PSA layer is formed from an acrylic PSA composition. That is, the acrylic PSA composition is defined as a precursor for constituting an acrylic PSA layer.

The state of the acrylic PSA composition may varies depending on the method employed for forming a PSA layer and are not particularly limited. For example, it can be an acrylic PSA composition comprising an acrylic polymer as an essential component, an acrylic PSA composition comprising, as an essential component, a mixture of monomer components (or "a monomer mixture") that form an acrylic polymer or a partially polymerized product thereof, or the like. Although not particularly limited, examples of the former include so-called emulsion-based, solvent-based, thermally melting (hot-melt) PSA compositions and the like. In other words, the former is an acrylic PSA composition obtainable by polymerizing a monomer mixture by a method such as emulsion polymerization, solution polymerization, bulk polymerization, or the like to obtain an acrylic polymer and adding a thermally expandable microsphere to the resultant. On the other hand, examples of the latter include a PSA composition curable by so-called activating energy rays. In other words, the latter is an acrylic PSA composition obtainable by adding a thermally expandable microsphere to a monomer mixture or a partially polymerized product thereof.

The former acrylic PSA composition can be transformed into an acrylic PSA layer by applying the acrylic PSA composition as a layer onto a suitable substrate (support), and if any solvent (e.g., organic solvents such as toluene, ethyl acetate, etc., or water) is contained in the acrylic PSA composition, removing the solvent by drying. On the other hand, the latter acrylic PSA composition can be transformed into an acrylic PSA layer by applying the acrylic PSA composition as a layer onto a suitable substrate (support) and heating or irradiating it with activating energy rays typified by ultraviolet (UV) rays to obtain an acrylic polymer via polymerization of the monomer components. These acrylic PSA compositions may contain other additives as necessary besides the essential components (an acrylic polymer, or a monomer mixture or a partially polymerized product thereof, a thermally expandable microsphere).

The "monomer mixture" refers to a mixture consisting of monomer components that forms an acrylic polymer. The "partially polymerized product" refers to a composition in which one, two or more components of the monomer mixture has been partially polymerized.

In particular, the acrylic PSA composition preferably (an activating energy ray-curable PSA composition) preferably comprises as an essential component a monomer mixture or a partially polymerized product thereof.

As described earlier, the acrylic polymer is preferably constituted with the following monomers (a1), (a2) and (a3) as constituents at the proportions indicated below. In other words, it is preferable that the acrylic polymer is obtained by polymerizing a monomer mixture that comprises the following monomers (a1), (a2) and (a3) at proportions indicated below. It is particularly preferable that the acrylic polymer is formed from an acrylic PSA composition comprising a monomer mixture that comprises the following monomers (a1), (a2) and (a3) at proportions indicated below or a partially polymerized product thereof.

(a1) an alkyl (meth)acrylate having an alkyl group with 4 to 12 carbon atoms and having a homopolymer glass transition temperature below 0 °C; at a proportion of 40 mass% to 90 mass%.
(a2) a monomer having at least one nitrogen atom and one ethylenically unsaturated bond per molecule; at a proportion of 5 mass% to 40 mass%.
(a3) a monomer (excluding the monomer (a2)) having one ethylenically unsaturated bond per molecule and having a homopolymer glass transition temperature of 0 °C or above.

; at a proportion of 0 mass% to 40 mass%.
(the proportions indicate the fractions (mass%) of the respective monomers in the total amount (100 mass%) of monomers (a1), (a2) and (a3)).

It is noted that in the present description, the "acrylic PSA composition comprising a monomer mixture that comprises monomers (a1), (a2) and (a3) or a partially polymerized product thereof' may be referred to as an "acrylic PSA composition A".

The monomer (a1) is an alkyl (meth)acrylate monomer having an alkyl group with 4 to 12 carbon atoms and having a homopolymer glass transition temperature below 0 °C. The monomer (a1) also has one (meth)acryloyl group and one ethylenically unsaturated bond per molecule. The monomer (a1) is a so-called monofunctional monomer. In the monomer mixture contained in the acrylic PSA composition A, the monomer (a1) is an essential monomer component.

Examples of the monomer (a1) include compounds listed in Table 1 below. A single species or a combination of two or more species of monomer (a1) can be used.

[Table 1]

Table 1

| Monomer (a1) | homopolymer glass transition temperature (°C) |
|---|---|
| n-butyl acrylate | -54 |
| sec-butyl acrylate | -22 |
| 1,3-dimethylbutyl acrylate | -15 |
| 2-ethylbutyl acrylate | -50 |
| 2-ethylhexyl acrylate | -50 |
| 2-ethylhexyl methacrylate | -10 |
| n-octyl acrylate | -65 |
| n-octyl methacrylate | -20 |
| n-nonyl acrylate | -58 |
| lauryl acrylate | -3 |
| lauryl methacrylate | -65 |

Among these, the monomer (a1) is preferably an alkyl (meth)acrylate having an alkyl group with 4 to 12 carbon atoms and having a homopolymer glass transition temperature below -20 °C, or more preferably an alkyl (meth)acrylate having an alkyl group with 4 to 12 carbon atoms and having a homopolymer glass transition temperature below -40 °C.

More specifically, the monomer (a1) is preferably n-butyl acrylate, sec-butyl acrylate, 2-ethylbutyl acrylate, 2-ethylhexyl acrylate, n-octyl acrylate, n-octyl methacrylate, n-nonyl acrylate, lauryl acrylate and lauryl methacrylate, and more preferably n-butyl acrylate and 2-ethyhexyl acrylate being more preferable.

Among the constituents of the acrylic polymer, the proportion of the monomer (a1) in the total amount (100 mass%) of monomers (a1), (a2) and (a3) is preferably 40 to 90 mass%, more preferably 50 to 85 mass%, or even more preferably 60 to 80 mass%. The proportion of the monomer (a1) is preferably 40 mass% or greater since the PSA layer stays flexible while producing good adhesion to metal surfaces. The proportion of the monomer (a1) is preferably 90 mass% or less since synergistic effects of the other monomers (a2) and (a3) can be expected and in addition to good adhesion to metal surfaces, a good balance with various other adhesive properties such as repulsion resistance, cohesive strength, etc., can be achieved.

When an acrylic PSA layer is obtained from the acrylic PSA composition A, essentially 100 % of the monomer mixture is converted to an acrylic polymer. Thus, the proportion of the monomer (a1) in the total amount (100 mass%) of monomers (a1), (a2) and (a3) present in the monomer mixture of the acrylic PSA composition corresponds to the proportion of the monomer (a1) in the acrylic polymer. In other words, in the monomer mixture of the acrylic PSA composition A, the monomer (a1) content in the total amount (100 mass%) of monomers (a1), (a2) and (a3) is preferably 40 to 90 mass%, more preferably 50 to 85 mass%, or even more preferably 60 to 80 mass%.

If the acrylic polymer contains "a monomer mixture comprising an alkyl (meth)acrylate monomer having an alkyl group with 4 to 12 carbon atoms and having a homopolymer glass transition temperature above 0 °C or a partially polymerized product thereof in place of the monomer (a1), the resulting PSA layer is likely to exhibit poorer adhesion to metal surfaces. Atlternatively, if the acrylic polymer contains "a monomer mixture containing an alkyl (meth)acrylate monomer having an alkyl group with 1 to 3 carbon atoms and having a homopolymer glass transition temperature above 0 °C or a partially polymerized product thereof" or "a monomer mixture containing an alkyl (meth)acrylate monomer having an alkyl group with more than 12 carbon atoms and having a homopolymer glass transition temperature above 0 °C or a partially polymerized product thereof" in place of the monomer (a1), the resulting PSA layer is likely to exhibit poorer adhesion to metal surfaces.

The monomer (a2) is a monomer having at least one nitrogen atom and one ethylenically unsaturated bond per molecule, As the monomer (a2) has one ethylenically unsaturated bond per molecule, it is a monofunctiona) monomer. The monomer (a2) is a co-monomer to the monomer (a1). A single species or a combination of two or more species of monomer (a2) can be used.

The monomer (a2) is not particularly limited as long as it is a monomer having at least one nitrogen atom and one ethylenically unsaturated bond per molecule. It is preferably at least one monomer selected from a group consisting of N-vinyl cyclic amides and (meth)acry-ylamides.

Examples of the N-vinyl cyclic amide include compounds represented by the following formula (1):

[Chem 1]

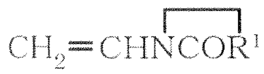 (1)

(in the formula (1), $R^1$ represents a divalent organic group).

In the formula (1) $R^1$ is preferably a saturated hydrocarbon group, or more preferably an alkylene group having 3 to 5 carbon atoms.

Examples of the N-vinyl cyclic amide include N-vinyl-2-pyrrolidone, N-vinyl-2-piperidone, N-vinyl-3-morpholinone, N-vinyl-2-caprolactam, N-vinyl-1,3-oxazine-2-on, N-vinyl-3,5-morpholinedion, N-vinylpyridine, N-vinylpyrimidine, N-vinylpiperidine, N-vinylpyrrol, and the like.

Examples of the (meth)acrylamide include (meth)acrylamide, N-alkyl(meth)acrylamides, N,N-dialkyl(meth)acrylamides and the like. Examples of N-alkyl(meth)acrylamides include N-ethyl(meth)acrylamide, N-n-butyl(meth)acrylamide, N-octylacrylamide and the like. Other examples include amino group-containing (meth)acrylamides such as dimethylaminoethyl(meth)acrylamide and dimethylaminoethyl(meth)acrylamide. Examples of N,N-dialkyl(meth)acrylamides include N,N-dimethyl(meth)acrylamide, N,N-diethyl(meth)acrylamide, N,N-dipropyl(meth)actylamide, N,N-diisopropyl (meth)acrylamide, N,N-di(n-butyl)(meth)acrylamide, N,N-di(t-butyl)(meth)acrylamide and the like.

Other examples of the (meth)acrylamide include N-actyloyl group-containing cyclic (meth)acrylamides such as (meth)acryloylmorpholine, (meth)acryloylpyrrolidone, (meth)acryloylpyrrolidine and the like.

Yet other examples of the (meth)acrylamide include N-hydroxyalkyl(meth)acrylamide monomers having a hydroxyalkyl group having 1 to 4 carbon atoms. Example of the N-hydroxyalkyl(meth)acrylamide monomer having a hydroxyalkyl group having 1 to 4 carbon atoms include compounds represented by the following formula (2):
[Chem 2]

$$CH_2=C(R^2)CONR^3R^4 \quad (2)$$

(in the formula (2), $R^2$ represents a hydrogen atom or a methyl group, $R^3$ represents a hydroxyalkyl group having 1 to 4 carbon atoms, $R^4$ represents a hydrogen atom or a saturated hydrocarbon group having 1 to 10 carbon atoms.)

In the formula (2), $R^3$ may have a straight or branched chain structure.

Examples of the N-hydroxyalkyl(meth)acrylamide monomer having a hydroxyalkyl group having 1 to 4 carbon atoms include N-methylol(meth)acrylamide, N-(2-hydroxyethyl)actylamide., N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl) methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide, N-methyl-N-2-hydroxyethyl(meth)acrylamide and the like.

Examples of the monomer (a2) other than the N-vinyl cyclic amides and the (meth)acrylamides include amino group-containing monomers such as aminoethyl(meth)acrylate, N,N-dimehylaminoethyl(meth)acrylate, N,N-dimethylaminopropyl(meth)acrylate, etc.; maleimide structure-containing monomers such as N-cyclohexylmaleimide, N-phenylmaleimide, etc.; itaconimide-based monomers such as N-methylitaconimide, N-ethylitaconimide, N-butylitaconimide, N-2-ethylhexylitaconimide, N-laurylitaconimide, N-cyclohexylitaconimide, etc.; cyanoacrylate-based monomers such as acrylonitrile, methacrylonitrile, etc.; succinimide-based monomers such as N-(meth)acryloyloxymethylenesuccinimide, N-(meth)acryloyl-6-oxyhexamethylenesuccinimide, N-(meth)acryloyl-8-oxyoctamethylenesuccinimide, etc.; and the like.

In view of balancing the dependable adhesion and flexibility of the acrylic PSA layer, preferable examples of the monomer (a2) include n-vinyl-2-pyrrolidone and N-vinyl-2-caprolactam; (meth)acrylamides (e.g., N,N-dialkylacylamides such as N,N-diethylacrylamide, N,N-dimethylacrylamide, etc.) having one or two N-alkyl groups with 1 to 4 (more preferably 1 or 2) carbon atoms; N-(2-hydroxyethyl)acrylamide, N-(2-hydroxyethyl)methacrylamide, N-methylol(meth) acrylamide, N-(3-hydroxypropyl)acrylamide, and the like. In paticular, as the monomer (a2), N,N-dimethylacrylamide, N-vinyl-2-pyrrolidone and N-vinyl-2-caprolactam are preferable, with N-vinyl-2-pyrrolidone and N-vinyl-2-caprolactam being the most preferable.

Among the constituents of the acrylic polymer, the proportion of the monomer (a2) in the total amount (100 mass%) of monomers (a1), (a2) and (a3) is preferably 5 mass% to 40 mass%, more preferably 10 mass% to 38 mass%, or even more preferably 15 mass% to 30 mass%. The proportion of the monomer (a2) is preferably 5 mass% or greater since good adhesion to metal surfaces can be obtained. The proportion of the monomer (a2) is preferably 40 mass% or less since suitable flexibility as well as good adhesion to metal surfaces can be obtained without lowering the other adhesive properties.

Similarly to the monomer (a1), when an acrylic PSA layer is obtained from the acrylic PSA composition A, essentially 100 % of the monomer mixture is converted to an acrylic polymer. Thus, the proportion of the monomer (a2) in the total amount (100 mass%) of monomers (a1), (a2) and (a3) present in the monomer mixture of the acrylic PSA

composition corresponds to the proportion of the monomer (a2) in the acrylic polymer. In other words, in the monomer mixture of the acrylic PSA composition A, the monomer (a2) content in the total amount (100 mass%) of monomers (a1), (a2) and (a3) is preferably 5 mass% to 40 mass%, more preferably 10 mass% to 38 mass%, or even more preferably 15 mass% to 30 mass%.

The monomer (a3) is a monomer having one ethylenically unsaturated bond per molecule and having a homopolymer glass transition temperature of 0 °C or above. The monomer (a2) is excluded from the scope of the monomer (a3). As the monomer (a3) has one ethylenically unsaturated bond per molecule, it is a monofonctional monomer. A single species or a combination of two or more species of monomer (a3) can be used.

Examples of the monomer (a3) include compounds listed in Table 2 below. [Table 2]

Table 2

| Monomer (a3) | homopolymer glass transition temperature (°C) |
|---|---|
| tert-butyl acrylate | 43 |
| tert-butyl methacrylate | 118 |
| cyclohexyl acrylate | 19 |
| cyclohexyl methacrylate | 83 |
| isobornyl acrylate | 94 |
| isobornyl methacrylate | 110 |
| furfuryl acrylate | 48 |
| dicyclopentanyl acrylate | 120 |
| 1,4-cyclohexanedimethanol monoacrylate | 9.8 |
| dicyclopentenyloxyethyl acrylate | 10-15 |

Among these, the monomer (a3) is preferably a monomer (excluding the monomer (a2)) having one ethylenically unsaturated bond per molecule and having a homopolymer glass transition temperature of 10 °C or above, or more preferably a monomer (excluding the monomer (a2)) having one ethylenically unsaturated bond per molecule and having a homopolymer glass transition temperature of 15 °C or above.

In the metal surface protective PSA sheet according to the present invention, inclusion of the monomer (a3) as a monomer constituent of the acrylic polymer which is the primary component of the PSA layer is advantageous in terms of providing dependable adhesion upon application and suitable release properties. This is considered due to the low polarity and the high glass transition temperature of the monomer (a3).

For not having a structure (e.g., an acidic group, etc.) within the molecule that would interact with adherends or for adjusting the elasticity and the flexibility of the PSA layer, the monomer (a3) is preferably "a (meth)acrylate monomer having a structure in which a (meth)acryloyloxy group is bonded to a tertiary carbon atom and having a homopolymer glass transition temperature of 0 °C or above" or "a (meth)acrylate monomer having a structure in which a (meth) acryloyloxy group is bonded to a carbon atom constituting a monocyclic or polycyclic aliphatic hydrocarbon ring and having a homopolymer glass transition temperature of 0 °C or above".

The monomer (a3) is preferably tert-butyl acrylate, tert-butyl methacrylate, cyclohexyl acrylate, cyclohexyl methacrylate, isobomyl acrylate, isobornyl methacrylate, dicyclopentanyl acrylate, furfuryl acrylate and 1,4-cyclohexanedimethanol monoacrylate, and more preferably tert-butyl acrylate, ter-t-butyl methacrylate, cyclohexyl acrylate, isobomyl acrylate, dicyclopentanyl acrylate and 1,4-cyclohexanedimethanol monoacrylate in view of the polymerizability. Furthermore, t-butyl acrylate, t-butyl methacrylate, isobomyl acrylate and isobomyl methacrylate are particularly preferable because of their higher Tg values.

Among the constituents of the acrylic polymer, the proportion of the monomer (a3) in the total amount (100 mass%) of monomers (a1), (a2) and (a3) is preferably 0 mass% to 40 mass%, more preferably 3 mass% to 30 mass%, or even more preferably 5 mass% to 20 mass%. The proportion of the monomer (a3) is preferably 3 mass% or greater since good adhesion to metal surfaces can be obtained. The proportion of the monomer (a3) is preferably 40 mass% or less since lowering of adhesion to metal surfaces can be prevented without lowering the other adhesive properties.

Similarly to the monomer (a1), when an acrylic PSA layer is obtained from the acrylic PSA composition A, essentially 100 % of the monomer mixture is converted to an acrylic polymer. Thus, the proportion of the monomer (a3) in the total amount (100 mass%) of monomers (a1), (a2) and (a3) present in the monomer mixture of the acrylic PSA composition corresponds to the proportion of the monomer (a3) in the acrylic polymer. In other words, in the monomer

mixture of the acrylic PSA composition A, the monomer (a3) content in the total amount (100 mass%) of monomers (a1), (a2) and (a3) is preferably 0 mass% to 40 mass%, more preferably 3 mass% to 30 mass%, or even more preferably 5 mass% to 20 mass%.

As a constituent of the acrylic polymer, a copolymerizing monomer (a4) may be contained in addition to the monomers (a1), (a2) and (a3) in a range where the effect of the present invention is not impaired. The scope of the monomer (a4) does not include the monomers (a1), (a2), (a3) or polyfunctional monomers described later. The monomer (a4) is a monofunctional monomer having one ethylenically unsaturated bond per molecule. A single species or a combination of two or more species of monomer (a4) can be used. The monomer (a4) content is not particularly limited, and is selected in a range where the effect of the present invention is not impaired.

On the other hand, as described earlier, in the present invention, it is desirable that the acrylic polymer has a carboxylic acid equivalent weight of 0.0000 eq./g and that the acrylic polymer is free of carboxyl groups. From the standpoint of the corrosivity, it is desirable that it is essentially free of other acidic functional groups besides carboxyl groups. Thus, it is desirable that the acrylic polymer of the present invention is essentially free of monomers having carboxyl groups or other acidic functional groups besides carboxyl groups as the monomer components constituting the acrylic polymer.

The acidic functional group refers to a functional group having an active hydrogen. Examples of the acidic functional groups include carboxyl group, sulfonate group, phosphate group, and the like. Being "essentially free of monomers having acidic functional groups" means not including such a monomer that had been intentionally added while excluding an inevitable inclusion. In particular, it means that in the monomer components constituting the acrylic polymer, the proportion (mass%) of the monomer having an acidic functional group is below 1 mass%, or preferably below 0.5 mass%.

Examples of the monomer having an acidic functional group include carboxyl group-containing monomers, sulfonate group-containing monomers, phosphate group-containing monomers and the like. Examples of the carboxyl group-containing monomers include acrylic acid, methacrylic acid, carboxyethyl acrylate, carboxylpentyl acrylate, itaconic acid, maleic acid, fumaric acid, crotonic acid and the like. Other examples include acid anhydrides such as maleic acid anhydride, itaconic acid anhydride and the like. Examples of the sulfonate group-containing monomers include styrene sulfonate, allyl sulfonate, 2-(meth)acrylamide-2-methylpropane sulfonate, (meth)acrylamide propane sulfonate, sulfopropyl (meth)acrylate, (meth)acryloyloxy naphthalene sulfonate and the like. Examples of the phosphate group-containing monomers include 2-hydroxyethylacryloyl phosphate and the like.

In view of obtaining good adhesive strength to metal surfaces upon application as well as suitable release properties, in the total amount (100 mass%) of monomers (a1), (a2) and (a3), it is preferable that the proportions of the monomers (a1), (a2) and (a3) are 40 to 90 mass%, 5 to 40 mass% and 0 to 40 mass%, respectively. In other words, it is particularly preferable that the metal surface protective PSA sheet according to the present invention comprises an acrylic PSA layer formed from an acrylic PSA composition A comprising a monomer mixture that contains monomers (a1), (a2) and (a3) or a partially polymerized product thereof, with the monomer mixture containing 40 to 90 mass% of the monomer (a1), 5 to 40 mass% of the monomer (a2) and 0 to 40 mass% of the monomer (a3) relative to the total amount (100 mass%) of the monomers (a1), (a2) and (a3) combined.

In view of obtaining good adhesion to metal surfaces upon application as well as suitable release properties, with respect to the constituents of the acrylic polymer or the monomer mixture for the acrylic PSA composition A, the (a2) to (a3) ratio (by mass) is preferably (a2)/(a3) = 1/1 to 4/1, more preferably 1.5/1 to 3.5/1, and even more preferably 2/1 to 3/1. When the (a2) to (a3) ratio (by mass) (a2)/(a3) is 1/1 to 4/1, good adhesion to metal surfaces can be obtained. On the other hand, when the (a2) to (a3) content ratio (mass ratio) is less than 1/1, the proportion of the monomer (a2) is smaller relative to the monomer (a3), not allowing good adhesion to metal surfaces. When the (a2) to (a3) content ratio (mass ratio) exceeds 4/1, the proportion of the monomer (a3) is smaller relative to the monomer (a2), not allowing good adhesion to metal surfaces.

The acrylic PSA composition A preferably comprises the thermally expandable microsphere along with the monomer mixture or a partially polymerized product thereof.

In other words, it is particularly preferable that the acrylic PSA layer is formed from an acrylic PSA composition A comprising a monomer mixture that comprises monomers (a1), (a2) and (a3) or a partially polymerized product thereof, and further comprising a thermally expandable microsphere, wherein, in the total amount (100 mass%) of the monomers (a1), (a2) and (a3), the monomer (a1) content is 40 to 90 mass%, the monomer (a2) content is 5 to 40 mass%, and the monomer (a3) content is 0 to 40 mass%.

The thermally expandable microsphere content in the acrylic PSA composition is not particutarly limited. Similarly to the monomer (a1), when an acrylic PSA layer is obtained from the acrylic PSA composition A, essentially 100 % of the monomer mixture is converted to an acrylic polymer. Thus, the thermally expandable microsphere content relative to 100 parts by mass of the monomer mixture in the acrylic PSA composition A or a partially polymerized product thereof corresponds to the thermally expandable microsphere content relative to the acrylic polymer. In other words, in the monomer mixture of the acrylic PSA composition A, relative to 100 parts of the monomer mixture or a partially polymerized

product thereof, the thermally expandable microsphere accounts for preferably 10 parts by mass to 200 parts by mass, more preferably 20 parts by mass to 125 parts by mass, even more preferably 25 parts by mass to 100 parts by mass, or particularly preferably 25 parts by mass to 80 parts by mass. When the thermally expandable microsphere content is 10 parts by mass or greater, good thermal releasability can be obtained. The thermally expandable microsphere content is preferably 200 parts by mass or less since good adhesion to metal surfaces can be obtained without lowering the other adhesive properties.

It is preferable that the acrylic PSA composition A further comprises a polymerization initiator such as a thermal polymerization initiator, a photopolymerization initiator, or the like along with the thermally expandable microsphere. When the acrylic PSA composition A comprises a polymerization initiator, curing reactions with heat or activating energy rays can be effectively employed to form an acrylic PSA layer, and therefore, the acrylic PSA composition A containing a thermally expandable microsphere mixed therein can be cured to readily obtain an acrylic PSA layer. In other words, inclusion of a polymerization initiator in the acrylic PSA composition A allows facile formation of an acrylic PSA layer having a constitution stably containing a thermally expandable microsphere. In particular, the acrylic PSA composition A preferably comprises a photopolymerization initiator as described later; and therefore, taking advantage of polymerization reaction (photo-curing reaction) with activating energy rays, can be readily obtained an acrylic PSA layer having a constitution stably containing a thermally expandable microsphere. A single species or a combination of two or more species of polymerization initiator can be used.

In particular, because the curing time during formation of an acrylic PSA layer using the acrylic PSA composition A can be shortened, the polymerization initiator is preferably a photopolymerization initiator. Examples of the activating energy ray irradiated when employing a photo-curing reaction that requires activating energy rays include ionizing radiation such as $\alpha$ rays, $\beta$ rays, $\gamma$ rays, neutron beams and electron beams; and UV rays and the like, with UV rays being particularly preferable. While the irradiation energy and the irradiation time of the activating energy ray are not particularly limited, these can be suitably selected in ranges that would not inhibit the polymerization reaction.

The photopolymerization initiator is not particularly limited. Examples include benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, ketal-based photopolymerization initiators, thioxanthone-based photopolymerization initiators and the like.

Examples of benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethane-1-one, anisole methyl ether, etc. Examples of acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone, etc. Examples of aromatic sulfonyl chloride-based photopolymerization initiators include 2-naphthalenesulfonyl chloride, etc. Examples of photoactive oxime-based photopolymerization initiators include 1-phenyl-1,1-propanedione-2-(o-ethoxycarbonyl)-oxime, etc. Examples of benzoin-based photopolymerization initiators include benzoin, etc. Examples of benzil-based photopolymerization initiators include benzil, etc. Examples of benzophenone-based photopolymerization initiators include benzophenone, benzoylbenzoic acid, 3,3'-dimethyl-4-methoxybenzophenone, polyvinylbenzophenone, $\alpha$-hydroxycyclohexylphenylketone, etc. Examples of ketal-based photopolymerization initiators include benzyl dimethyl ketal, etc. Examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone, etc.

Examples of ketal photopolymerization initiators include 2,2-dimethoxy-1,2-diphenylethane-I-one (trade name "IRGACURE 651" available from BASF Japan Ltd.), etc. Examples of $\alpha$-hydroxyketone-based photopolymerization initiators include 1-hydroxy-cyclohexyl phenyl ketone (trade name "IRGACURE 184" available from BASF Japan Ltd.), 2-hydroxy-2-methyl-1-phenyl-propane-1-one (trade name "Darocur 1173" available from BASF Japan Ltd.), 1-[4-(2-hydroxyethoxy)-phenyl]-2-hydroxy-2-methyl-1-propane-1-one (trade name "IRGACURE 2959" available from BASF Japan Ltd.), etc. Examples of $\alpha$-aminoketone-based photopolymerization initiators include 2-methyl-1[4-(methy)thio)phenyl]-2-morpholinopropane-1-one (trade name "IRGACURE 907" available from BASF Japan Ltd.), 2-benzyl-2-dimethylamino-1-(4-morpholinophenyl)-butanone-1 (trade name "IRGACURE 369" available from BASF Japan Ltd.), etc. Examples of acylphosphine oxide-based photopolymerization initiators include 2,4,6-trimethylbenzoyldiphenylphosphine oxide (trade name "Lucirin TPO" available from BASF Japan Ltd.).

The polymerization initiator content in the acrylic PSA composition A varies depending on its type and is not particularly limited. When it is a photopolymerization initiator, its content relative to 100 parts by mass of the monomer mixture is preferably 0.001 parts by mass to 5 parts by mass, more preferably 0.01 parts by mass to 5 parts by mass, or even more preferably 0.05 parts by mass to 3 parts by mass. The photopolymerization initiator content is preferably 0.001 part by mass or greater since the time required for the polymerization reaction can be suppressed from becoming longer. It is preferably 5 parts by mass or less since the molecular weight of the acrylic polymer contained in the acrylic

PSA layer can be suppressed from decreasing, whereby deviations in the adhesive properties can be suppressed.

In view of modifying the elasticity and the flexibility of the acrylic PSA layer and further increasing the cohesive strength of the acrylic PSA layer to increase the adhesive strength, the acrylic PSA composition A preferably comprises, as a component, a monomer having two or more ethylenically unsaturated bonds per molecule. Also in view of allowing efficient reduction of the adhesive strength upon foaming of the thermally expandable microsphere with heating, the acrylic PSA composition A preferably comprises a monomer having two or more ethylenically unsaturated bonds per molecule. In the present description, the "monomer having two or more ethylenically unsaturated bonds per molecule" may be referred to as a "polyfunctional monomer". The scope of the polyfunctional monomer does not include the monomers (a2) or (a3). A single species or a combination of two or more species of polyfunctional monomer can be used.

A preferable polyfunctional monomer has two or more ethylenically unsaturated bonds per molecule, with at least one of the ethylenically unsaturated bonds being an ethylenically unsaturated bond belonging to a (meth)acryloyl group. In the present description, the "monomer having two or more ethylenically unsaturated bonds per molecule, with at least one of the ethylenically unsaturated bonds being an ethylenically unsaturated bond belonging to a (meth)acryloyl group" may be referred to as a "polyfunctional (meth)acrylate". In the polyfunctional (meth)acrylate, each ethylenically unsaturated bond within the molecule may be an ethylenically unsaturated bond belonging to a (meth)acryloyl group.

Examples of the polyfunctional (meth)acrylate include trimethylolpropane tri(meth)acrylate, tetramethylolmethane tetra(meth)acrylate, pentaerythritol di(meth)acrylate, pentaerythritol tti(meth)acrylate, pentaerythritol tetra(meth) acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritolmonohydroxy penta(meth)acrylate, dipentaerythritol hexa(meth) acrylate, polyethylene glycol di(meth)acrylate, hexanediol di(meth)acrylate, (poly)ethylene glycol di(meth)acrylate, (poly) propylene glycol di(meth)acrylate, neopentylglycol di(meth)acrylate, tetramethylolmethane tri(meth)acrylate, allyl(meth) acrylate, vinyl (meth)acrylate, epoxy acrylate, polyester acrylate, urethane acrylate, and reactive hyperbranched polymers having in the terminal several (meth)acryloyl groups (e.g., trade names "CN2300," "CN2301," and "CN2320," available from Sartomer USA, LLC) and the like. A single species or a combination of two or more species of polyfunctional (meth) acrylate can be used.

The polyfunctional monomer content in the acrylic PSA composition A is not particularly limited. In particular, when the acrylic PSA composition contains the polyfunctional (meth)acrylate, its content relative to 100 parts by mass of the monomer mixture is preferably 5 parts by mass or less (e.g., 0.001 part by mass to 5 parts by mass), more preferably 3 parts by mass or less (e.g., 0.001 part by mass to 3 parts by mass), or even more preferably I part by mass or less (e.g., 0.001 parts by mass to 1 part by mass). The polyfunctional (meth)acrylate content is preferably 5 parts by mass or less since the flexibility of the acrylic PSA layer can be ensured while good adhesion to metal surfaces can be attained. The polyfunctional (meth)acrylate content is preferably 0.001 part by mass or greater since sufficient cohesive strength and highly dependable adhesion can be obtained with the acrylic PSA layer.

It is preferable that the acrylic PSA composition A comprises the polyfunctional monomer (especially a polyfunctional (meth)acrylate) in an amount suitably adjusted so that the solvent-insoluble portion (gel fraction) of the acrylic PSA layer as described later is at a desirable level.

The acrylic PSA composition may further contain additives as necessary within ranges that would not impair the effect of the present invention. Examples of these additives include crosslinking agents such as isocyanate-based crosslinking agents, epoxy-based crosslinking agents, etc.; tackifiers such as rosin-derivative resins, polyterpene resins, petroleum resins, oil-soluble phenol resins, etc.; plasticizers; fillers; anti-aging agents; surfactants; and the like. A single species or a combination of two or more species of additives can be used.

The acrylic PSA composition may be modified to have a viscosity (typically, a viscosity of 0.3 Pa·s to 40 Pa·s when measured at a temperature of 25 °C by a viscosity measurement using a type B viscometer) suitable in terms of its handlings for its application. In view of obtaining a suitable viscosity, the acrylic PSA composition A preferably comprises a partially polymerized product of the monomer mixture. Alternatively, a thickening polymer can be added.

As described earlier, a partially polymerized product of the monomer mixture refers to a composition in which one, two or more monomer components therein are partially polymerized. A partially polymerized product of the monomer mixture may be in a viscous syrup-like state depending on its conversion.

A partially polymerized product of the monomer mixture can be obtained by polymerizing part of the monomer components contained in the monomer mixture. For example, a partially polymerized product of a monomer mixture can be obtained by irradiating the monomer mixture with activating energy rays (particularly UV rays) while avoiding contacts with oxygen.

The conversion of the partially polymerized product of the monomer mixture is not particularly limited, In view of obtaining a viscosity suitable for handlings and application of the acrylic PSA composition A, the conversion is preferably 2 mass% to 40 mass%, or more preferably 5 mass% to 20 mass%. The conversion of the partially polymerized product can be determined as described below.

<Method for measuring the conversion of a partially polymerized product>

1 g of partially polymerized product is accurately weighed out as a specimen. This (1g) is "the weight of the partially polymerized product prior to drying". Subsequently, the specimen is allowed to dry at 130 °C for two hours, and the dried specimen is accurately weighed out to determined "the weight of the partially polymerized product after dried". From "the weight of the partially polymerized product prior to drying" and "the weight of the partially polymerized product after dried", the difference in the weight of the specimen after two hours of drying is determined as "the reduced amount of weight" (the volatile content, the weight of unreacted monomers).
From "the weight of the partially polymerized product prior to drying" and "the reduced amount of weight" obtained, by the following equation, the conversion (mass%) of the partially polymerized product is determined:

$$\text{Conversion of partially polymerized product (mass\%)}$$

$$= [1\text{-(reduced amount of weight)/(weight of partially polymerized product prior to drying)}] \times 100$$

The method for preparing the acrylic PSA composition is not particularly limited. For example, one method comprises adding a thermally expandable microsphere and components (e.g., a photopolymerization initiator, a polyfunctional monomer such as a polyfunctional (meth)acrylate, etc., other additives, etc.) added as necessary to the monomer mixture or a partially polymerized product thereof.

The acrylic PSA layer is formed by a known or commonly employed method. For example, it is formed by applying the acrylic PSA composition on top of a suitable support such as a release film or a substrate to form an acrylic PSA composition layer, and subsequently allowing the acrylic PSA composition layer to dry or cure (e.g., cure with heat or activating energy rays) as necessary. When it is cured (photo-cured) by activating energy rays, as photopolymerization reaction is inhibited by oxygen in the air, it is preferable to block out oxygen by, for instance, adhering a release film to the PSA composition layer, photo-curing the composition under a nitrogen atmosphere, or other like mean.

Examples of activating energy rays include ionizing radiation such as $\alpha$ rays, $\beta$ rays, $\gamma$ rays, neutron beams and electron beams as well as UV rays. Among these, UV rays are preferable. The irradiation energy and irradiation time of the activating energy ray are not particularly limited as long as the reaction of monomer components is allowed to take place. In a preferable embodiment of irradiation with the active energy ray, UV rays can be irradiated at a light amount of 400 $mJ/cm^2$ to 4000 $mJ/cm^2$, with the UV rays having an intensity of 1 $mW/cm^2$ to 200 $mW/cm^2$ at a wavelength of 300 nm to 400 nm.

The light source used for irradiation with UV rays as the activating energy ray is not particularly limited as long as it has a spectral distribution in a wavelength range of 180 nm to 460 nm (preferably 300 nm to 400 nm). Example include general irradiation devices such as a chemical lamp, black light (e.g., black light available from Toshiba Lighting and Technology Corporation), mercury arc, carbon arc, low pressure mercury lamp, medium pressure mercury lamp, high pressure mercury lamp, extra high pressure mercury lamp, metal halide lamp and the like. Other examples include irradiation devices capable of generating electromagnetic radiation at a wavelength longer or shorter than the wavelength mentioned above.

The acrylic PSA layer has a solvent-insoluble portion (a gel fraction) of 50 mass% or greater (e.g., 50 mass% to 90 mass%), preferably 60 mass% or greater (e.g., 60 mass% to 90 mass%), or more preferably 65 mass% or greater (e.g., 65 mass% to 85 mass%). The solvent-insoluble portion is preferably 50 mass% or greater in view that good thermal releasability is likely to be obtained and also in view of obtaining good adhesion to metal surfaces. The solvent-insoluble portion is preferably 90 mass% or less since the wettability of the PSA layer increases, allowing good adhesion to metal surfaces.

The solvent-insoluble portion of the acrylic PSA layer means "the proportion of components insoluble to a solvent" contained in the PSA layer, referring to a value determined by the "method for measuring solvent-insoluble portion of PSA layer" described below. The solvent-insoluble portion of the PSA layer includes a thermally expandable microsphere insoluble to the solvent.

<Method for measuring solvent-insoluble portion of PSA layer>

Approximately 1 g of a PSA layer is obtained as a specimen. The specimen is accurately weighed out to determine the weight as "the weight of the PSA layer prior to immersion". Subsequently, the specimen is immersed in 40 g of ethyl acetate for 7 days, and then all components insoluble to ethyl acetate (all the insoluble portion) are collected. All the insoluble portion collected is allowed to dry at 130 °C for 2 hours, and then the weight is determined as "the dry

weight of the insoluble portion". The numerical values obtained are substituted into the following equation to determine the solvent-insoluble portion (%) in the PSA layer:

$$\text{Solvent-insoluble portion in PSA layer (\%)} = [(\text{dry weight of insoluble portion})/(\text{weight of PSA layer prior to immersion})] \times 100.$$

The thickness of the acrylic PSA layer can be suitably selected. For ensuring the evenness of the surface, when a thermally expandable microsphere is contained, it is preferable that the thickness is equal to or larger than the largest diameter of the microsphere. The thickness of the acrylic PSA layer is not particularly limited. In view of obtaining dependable adhesion, suitable release properties and a desirable value for the adhesive strength to metal surfaces, it is preferably 10 μm to 2000 μm, more preferably 30 μm to 1000 μm, or even more preferably 50 μm to 500 μm. The acrylic PSA layer may consist of a single layer or multiple layers.

(Substrate)

As described above, the metal surface protective PSA sheet according to the present invention comprises the acrylic PSA layer at least on one face of a substrate. The substrate is not particularly limited while examples include paper-based substrates such as paper, etc.; fiber-based substrates such as fabrics, non-woven fabrics, nets, etc.; metallic substrates such as metal foils, metal plates, etc.; plastic-based substrates such as films and sheets of various resins (olefin-based resins, polyester-based resins, polyvinyl chloride-based resins, vinyl acetate-based resins, amide-based resins, polyimide-based resins, polyetheretherketone (PEEK), polyphenylene sulfide (PPS)), etc.; rubber-based substrates such as rubber sheets, etc.; foam such as foam sheets, etc.; laminates of these (especially, a laminate consisting of a plastic-based substrate and other substrate(s), a laminate consisting of plastic films (or sheets)); and the like. As the substrate, a heating layer described later can be used.

The substrate can be a thermally shrinkable film. The thermally shrinkable film is a film that undergoes shrinkage at least in the direction of an arbitrary axis when heated, taking advantage of internal stress, etc., arising from the molecular orientation of a stretched film. When the substrate is a thermally shrinkable film, by heating the PSA sheet when removing it from a glass surface, thermal shrinkage (deformation) of the substrate effects peeling while readily decreasing the adhesive strength. When the substrate is a thermally shrinkable film, the adhesive strength to glass surfaces described later can be readily adjusted.

According to a substrate-backed PSA sheet comprising the acrylic PSA layer on at least one face of a thermally shrinkable film as a substrate, with the PSA layer comprising a thermally expandable microsphere, by heating the PSA sheet when removing it from a glass surface, the adhesive strength reduced by deformation of the acrylic PSA layer caused by foaming of the thermally expandable microsphere is coupled with peeling effect by thermal shrinkage (deformation) of the thermally shrinkable film, whereby the adhesive strength can be reduced more easily.

A preferable thermally shrinkable film has a shrinkage factor of 5 % or greater (more preferably 8 % or greater, even more preferably 10 % or greater, particularly preferably 20 % or larger at a temperature in a range of 70 °C to 180 °C (e.g., at 80 °C, 145 °C, 170 °C, etc.). A shrinkage factor of 5 % or larger is preferable since a force to separate the PSA layer away from the adherend is applied, effecting efficient peeling. When the shrinkage factor is below 5 %, sufficient volume change may not be obtained in the thermally shrinkable film, and efficient peeling may be less likely to take place. The upper limit of the shrinkage factor is usually 90 %.

<Method for measuring shrinkage factor>

A thermally shrinkable film cut to a square (with one side being in parallel with the machine direction) of an arbitrary size (e.g., about 20 mm by 20 mm) is placed in a hot-air dryer and heated at a prescribed temperature for four minutes. The film before heated (at room temperature (23 °C)) and after heated is measured for the lengths of its four sides, and the shrinkage factors for the four sides are determined, respectively, by the equation shown below. The largest shrinkage factor is referred to as the shrinkage factor in the main shrinkage direction:

$$\text{Shrinkage factor (\%)} = [(\text{length prior to shrinking - length after shrunk})/(\text{length prior to shrinking})] \times 100$$

In a metal surface protective PSA sheet comprising the acrylic PSA layer on at least one face of a thermally shrinkable film as a substrate, with the PSA layer comprising a thermally expandable microsphere, the thermally shrinkable film preferably has a shrinkage factor of 5 % or larger (more preferably 10 % or larger) in the main shrinkage direction

when evaluated by the measurement method described above at a temperature (expansion temperature, foam temperature) when a thermally expandable microsphere expands. This is because when shrinkage of the thermally shrinkable film and expansion of the thermally expandable microsphere take place at the same time, can be obtained synergetic effects of (i) peeling arising from deformation of the PSA layer caused by shrinkage of the thermally shrinkable film and (ii) lowering or loss of the adhesive strength due to an uneven PSA layer surface resulting from expansion deformation of the acrylic PSA layer caused by expansion and/or foaming of the thermally expandable microsphere.

While the material constituting the thermally shrinkable film is not particularly limited, examples include polyolefin resins such as polypropylene, polyethylene, etc.; polyester resins such as polybutylene terephthalate, polyethylene terephthalate, etc.; polynorbomene resins; polyimide resins; polyamide resins; polyurethane resins; polyvinyl chloride resins; polyvinylidene chloride resins; polystyrene resins; and the like. Among these materials, a single species or a combination of two or more species can be used.

In particular, as the material constituting the thermally shrinkable film, a polyester resin is preferable. In other words, the thermally shrinkable film is preferably made of a polyester resin. A thermally shrinkable film made of a polyester resin is advantageous in view that the adhesive strength (anchoring) to the PSA layer is so high that a primer coating process is not necessary.

The thermally shrinkable film can be a commercial product. Examples of commercially available thermally shrinkable film include trade name "SPACECLEAN" (available from Toyobo Co., Ltd.), trade name "FANCY WRAP" (available from Gunze Ltd.), trade name "TORAYFAN" (available from Toray Industries, Inc.), trade name "ARTON" (available from JSR Corporation), trade name "ZEONOR" (available from Zeon Corporation), trade name "SUNTEC" (available from Asahi Chemicals Corporation) and the like.

The thickness of the substrate (particularly, the thickness of the thermally shrinkable film) is not particularly limited. For example, it is preferably 10 μm to 500 μm, more preferably 12 μm to 200 μm, or even more preferably 15 μm to 100 μm. The substrate may consist of a single layer or multiple layers. The substrate may have been subjected to various processes such as a backside treatment, an antistatic treatment, a primer coating process, or other like processes.

(Other layers)

The metal surface protective PSA sheet according to the present invention may comprise other layer(s) besides the acrylic PSA layer and the substrate as long as the effect of the present invention is not impaired.

The other layer can be a heating layer. The heating layer can produce heat when necessary. When the metal surface protective PSA sheet according to the present invention has such a heating layer, by allowing the heating layer to produce heat, the PSA layer can undergo expansion deformation by shrinkage of the thermally shrinkable film as a substrate, or expansion and/or foaming of the thermally expandable microsphere in the acrylic PSA layer containing the said thermally expandable microsphere.

While the heating layer is not particularly limited, it is preferably a sheet heater. A sheet heater comprises at least a heating element with a flat plate or a sheet shape, which generates heat via conduction. Examples of a heating element in a flat plate or in a sheet include metal foils, metal plates, graphite carbon sheet, sheets of materials containing carbon powder, metal powder, etc. The sheet heater may comprise an electrically non-conducting sheet covering the flat plate or the sheet of a heating element.

While the thickness of the heating layer is not particularly limited, it is preferably 10 μm to 300 μm, or more preferably 10 μm to 150 μm.

The metal surface protective PSA sheet according to the present invention may be a substrate-backed PSA sheet comprising the sheet heater as a substrate.

Examples of the other layers mentioned above include intermediate layers, primer coating layers, PSA layers excluding the acrylic PSA layer.

(Release film)

For protection of the adhesive surface, the metal surface protective PSA sheet according to the present invention may be protected with a release film until it is applied. While the release film is not particularly limited, examples include substrates having at least one surface that had been treated with a release treatment agent (release agent), poorly adhesive substrates formed from a fluorine-based polymer (e.g., polytetrafluoroethylene, polychlorottifluoroethylene, polyvinyl fluoride, polyvinylidene fluoride, tetrafluoroethylene-hexafluoropropylene copolymers, chlorofluoroethylene-vinylidene fluoride copolymers, etc.), poorly adhesive substrates formed from a non-polar polymer (e.g., olefin-based resins such as polyethylene, polypropyelene, etc.) and the like. Both faces of a poorly adhesive substrate can be used as release faces while in a release-treated substate, the release treated surface can be used as a release face. The release film can be formed by a known or commonly used method.

Examples of a substrate (release film substrate) having at least one face treated with the release treatment agent include polyester films such as polyethylene terephthalate films, etc.; olefin-based resin films such as polyethylene films, polypropylene films, etc.; polyvinyl chloride films; polyimide films; polyamide films such as nylon films, etc.; plastic-based substrate films (synthetic resin films) such as rayon films, etc.; and the like. Other examples include paper-based substrates constituted with paper such as high-grade paper, Washi paper, Kraft paper, glassin paper, synthetic paper, top-coated paper, and the like. Among these, polyester films such as polyethylene terephthalate films, etc., are preferable.
While the release treatment agent used in the substrate (release film substrate) having at least one face treated with the release treatment agent is not particularly limited, examples include silicone-based release agents, fluorine-based release agents, long chain alkyl-based release agents, and the like. A single species or a combination of two or more species of release treatment agent can be used.
The thickness of the release film is not particularly limited. The release film may consist of either a single layer or multiple layers.

(Metal surface protective PSA sheet)

The metal surface protective PSA sheet according to the present invention has an adhesive strength to metal surfaces of 10.0 N/20mm or greater, preferably 11.0 N/20mm or greater, or more preferably 12.0 N/20mm or greater (typically 20.0 N/20mm or smaller, preferably 16.0 N/20mm or smaller).
The metal surface protective PSA sheet according to the present invention has an adhesive strength to metal surfaces of 10.0 N/20mm or larger; and therefore, it adheres strongly with a sufficient adhesive strength to a metal plate for protection, and it can reliably protect the metal plate. The adhesive strength to metal surfaces in the present invention can be measured by a certain method under certain conditions described later in the worked examples.
While the thickness of the metal surface protective PSA sheet according to the present invention is not particularly limited, it can be 10 μm to 2000 μm, or preferably 30 μm to 1000 μm. The thickness of the metal surface protective PSA sheet does not include the thickness of a release film used for protecting an adhesive face.
The state of the metal surface protective PSA sheet according to the present invention is not particularly limited. It can be in a wound roll or in a laminate consisting of sheets. In other words, the metal surface protective PSA sheet according to the present invention may be in a form such as a sheet, tape, etc.
The metal surface protective PSA sheet wound in a roll may have a wound roll form with a release film protecting the adhesive face. The metal surface protective PSA sheet wound in a roll may have a wound roll form with the substrate having a release treated layer (treated backface layer) formed on one side (on the surface with no PSA layer formed thereon) of the substrate to protect the adhesive face.
The PSA sheet according to the present invention may be processed after fabricated to have a form different from a sheet form. For example, it can be cut out to have an arbitrary shape.
While the method for fabricating the metal surface protective PSA sheet according to the present invention is not particularly limited, it can be fabricated by a known or commonly used method. For example, it can be fabricated by applying the acrylic PSA composition to at least one face of the substrate to obtain an acrylic PSA composition layer followed by curing the acrylic PSA composition layer to obtain an acrylic PSA layer. Alternatively, the acrylic PSA layer fabricated in advance can be transferred to at least one face of the substrate to fabricate a PSA sheet.
The metal surface protective PSA sheet according to the present invention exhibits great adhesive strength when used on metal surfaces, yet when removed from the metal surface, the adhesive strength can be reduced to a level that allows self-peeling. The metal surface protective PSA sheet of the present invention has features that allow lowering of the adhesive strength to metal surfaces with heating. In other words, the metal surface protective PSA sheet according to the present invention exhibits thermal removability.
In the metal surface protective PSA sheet according to the present invention, the adhesive strength can be reduced to a level that allows self-peeling when the PSA sheet is being removed from a metal surface. In other words, it has properties that allow easy removal. Thus, the metal surface protective PSA sheet according to the present invention can be preferably used for applications such as protection during transport of metallic materials, or temporary cosmetic films for metal plates. More specifically, it may be used on steel plates for vehicles and various machines, processed metal parts and electronic components, wheels of tires, blades of wind generators and metallic display boards, or as advertising outer films, and the like.

EXAMPLES

The present invention is described further in detail below with worked examples while the present invention is not at all limited to these worked examples. Hereinafter, all parts and percentages are by mass unless otherwise indicated. In the description that follows, unless noted otherwise, all references to "parts" and "%" are based on mass.

(Preparation of PSA composition A)

To a four-neck flask, were placed 100 parts of a monomer mixture consisting of 70 parts of 2-ethylhexyl acrylate (2EHA), 20 parts of N-vinylcaprolactam (NVC) and 10 parts isobornyl acrylate (IBXA); 0.05 part of 1-hydroxycyclohexyl phenyl ketone (trade name "I RUGACURE 184" available from BASF Japan Ltd.) as a photopolymerization initiator; and 0.05 part of 2,2-dimethoxy-1,2-diphenylethane-1-on (trade name "IRGACURE 651" available from BASF Japan, Ltd.) as a photopolymerization initiator. The resulting mixture was photopolymerized by UV-ray irradiation under a nitrogen atmosphere to a viscosity of about 15 Pa·s (10 rpm, 30 °C, BH viscometer No. 5 rotor) to obtain a partially polymerized product of the monomer mixture (partially polymerized monomer syrup). This partially polymerized monomer syrup had a conversion of 7.2 %.
To 100 parts of the partially polymerized monomer syrup, were added 30 parts of a thermally expandable microsphere (expanding agent, trade name "EXPANCEL 051 DU 40" available from Expancel Corporation) and 0.028 part of 1,6-hexanediol diacrylate (HDDA) as a polyfunctional (meth)acrylate. The resulting mixture was stirred homogeneously to obtain a PSA composition A.

(Preparation of PSA composition B)

Using a monomer mixture consisting of 60 parts of 2EHA, 30 parts of N,N-dimethylacrylamide (DMAA) and 10 parts of IBXA, in the same manner as the preparation of PSA composition A, a partially polymerized monomer syrup was obtained. This partially polymerized monomer syrup had a conversion of 12.6 %.
Using this partially polymerized monomer syrup, in the same manner as the preparation of PSA composition A, PSA composition B was obtained.

(Preparation of PSAcomposition C)

Using a monomer mixture consisting of 70 parts of 2EHA, 20 parts of NVC and 10 parts of t-butyl acrylate (t-BA), in the same manner as the preparation of PSA composition A, a partially polymerized monomer syrup was obtained. This partially polymerized monomer syrup had a conversion of 5.9 %.
Using this partially polymerized monomer syrup, in the same manner as the preparation of PSA composition A, PSA composition C was obtained.

(Preparation of PSA composition D)

Using a monomer mixture consisting of 70 parts of lauryl acrylate (LA), 20 parts ofN-vinylpyrrolidone (NVP) and 10 parts of IBXA, in the same manner as the preparation of PSA composition A, a partially polymerized monomer syrup was obtained. This partially polymerized monomer syrup had a conversion of 10.1 %.
Using this partially polymerized monomer syrup, in the same manner as the preparation of PSA composition A, PSA composition D was obtained.

(Preparation of PSA composition E)

Using a monomer mixture consisting of 70 parts of 2EHA, 20 parts of NVP and 10 parts of IBXA, in the same manner as the preparation of PSA composition A, a partially polymerized monomer syrup was obtained. This partially polymerized monomer syrup had a conversion of 8.5 %.
Using this partially polymerized monomer syrup, in the same manner as the preparation of PSA composition A, PSA composition E was obtained.

(Preparation of PSA composition F)

Using a monomer mixture consisting of 75 parts of 2EHA and 25 parts of acrylic acid (AA), in the same manner as the preparation of PSA composition A, a partially polymerized monomer syrup was obtained. This partially polymerized monomer syrup had a conversion of 7.0 %.
Using this partially polymerized monomer syrup, in the same manner as the preparation of PSA composition A except that 20 parts of a thermally expandable microsphere (expanding agent, trade name "EXPANCEL 051 DU 40" available from Expancel Corporation) was added to 100 parts of this partially polymerized monomer syrup, PSA composition F was obtained.

(Preparation of PSA composition G)

Using a monomer mixture consisting of 90 parts of 2EHA and 10 parts of AA, in the same manner as the preparation of PSA composition A, a partially polymerized monomer syrup was obtained. This partially polymerized monomer syrup had a conversion of 11.0 %.
Using this partially polymerized monomer syrup, in the same manner as the preparation of PSA composition A except that 20 parts of a thermally expandable microsphere (expanding agent, trade name "EXPANCEL 051 DU 40" available from Expancel Corporation) was added to 100 parts of this partially polymerized monomer syrup, PSA composition G was obtained.

(Preparation of PSA composition H)

Using a monomer mixture consisting of 70 parts of 2EHA, 20 parts of NVC, 9.5 parts of IBXA and 0.5 part of AA, in the same manner as the preparation of PSA composition A, a partially polymerized monomer syrup was obtained. This partially polymerized monomer syrup had a conversion of 6.7 %.
Using this partially polymerized monomer syrup, in the same manner as the preparation of PSA composition A, PSA composition H was obtained.

(Preparation of PSA composition I)

Using a monomer mixture consisting of 80 parts of 2EHA, 3 parts of NVC and 17 parts of IBXA, in the same manner as the preparation of PSA composition A, a partially polymerized monomer syrup was obtained. This partially polymerized monomer syrup had a conversion of 6.7 %.
Using this partially polymerized monomer syrup, in the same manner as the preparation of PSA composition A, PSA composition I was obtained.

(Preparation of PSA composition J)

Using a monomer mixture consisting of 30 parts of 2EHA, 60 parts of NVC and 10 parts of IBXA, in the same manner as the preparation of PSA composition A, a partially polymerized monomer syrup was obtained. This partially polymerized monomer syrup had a conversion of 6.7 %.
Using this partially polymerized monomer syrup, in the same manner as the preparation of PSA composition A, PSA composition J was obtained.

(Substrate A)

As substrate A, was used a 50 μm thick PET film (trade name "LUMIRROR S-50" available from Toray Industries, Inc.).

(Substrate B)

As substrate B, was used a thermally shrinkable film (trade name "SPACECLEAN S7200" available from Toyobo Co., Ltd.; 30 μm thick, shrinkage factor of 35 % at 145 °C).

(Release film A)

As release film A, was used a PET film (trade name "DIAFOIL MRN-38" available from Mitsubishi Plastics, Inc.) having a surface that had been treated with a silicone-based release agent.

(Example 1)

(Substrate-free double-faced PSA sheet)

PSA composition A was applied to the release-treated surface of a release film A so as to form a PSA layer having a thickness of 50 μm after cured. Subsequently, to the PSA composition layer, another piece of release film A wad adhered in such a way that the release-treated surface of film A covered the PSA composition layer to obtain a sheet having the PSA composition layer between the two release films.
The PSA composition layer was irradiated with UV rays at an intensity of 4 mW/$cm^2$ and a light amount of 1200 mJ/$cm^2$

tor curing to fabricate a substrate-free double-faced SPA sheet having a PSA layer A.
This substrate-free double-faced PSA sheet has a layered constitution in order of release film A/PSA layer A/release film A.
The PSA layer A had a thickness of 50 μm and a 81.8 % solvent-insoluble portion.

(Substrate-backed single-faced PSA sheet)

One of the release films A was removed from the substrate-free double-faced PSA sheet fabricated in Example 1, and a substrate A was adhered to the exposed adhesive surface to fabricate a substrate-backed single-faced PSA sheet.
This substrate-backed single-faced PSA sheet has a layered constitution in order of release film A/PSA layer A/substrate A.

(Example 2)

One of the release films A was removed from the substrate-free PSA sheet fabricated in Example 1, and a substrate B was adhered to the exposed adhesive surface to fablicate a substrate-backed single-faced PA sheet.
This substrate-backed single-faced PSA sheet has a layered construction in order of release film A/PSA layer A/substrate B.

(Example 3)

In the same manner as Example 1 except that PSA composition B was used in place of PSA composition A and that the PSA layer was formed to have a thickness of 100 μm after cured, were fabricated a substrate-free double-faced PSA sheet and a substrate-backed single-faced PSA sheet, each having a PSA layer B.
The PSA layer B had a 81.8 % solvent-insoluble portion.

(Example 4)

In the same manner as Example 1 except that PSA composition C was used in place of PSA composition A and that the PSA layer was formed to have a thickness of 100 μm after cured, were fabricated a substrate-free double-faced PSA sheet and a substrate-backed single-faced PSA sheet, each having a PSA layer C.
The PSA layer C had a 78.0 % solvent-insoluble portion.

(Example 5)

In the same manner as Example 1 except that PSA composition D was used in place of PSA composition A and that the PSA layer was formed to have a thickness of 100 μm after cured, were fabricated a substrate-free double-faced PSA sheet and a substrate-backed single-faced PSA sheet, each having a PSA layer D. The PSA layer D had a 65.4 % solvent-insoluble portion.

(Example 6)

One of the release films A was removed from the substrate-free PSA sheet fabricated in Example 5, and a substrate B was adhered to the exposed adhesive surface to fabricate a substrate-backed single-faced PA sheet.
This substrate-backed single-faced PSA sheet has a layered construction in order of release film A/PSA layer D/substrate B.

(Example 7)

In the same manner as Example 1 except that PSA composition E was used in place of PSA composition A and that the PSA layer was formed to have a thickness of 100 μm after cured, were fabricated a substrate-free double-faced PSA sheet and a substrate-backed single-faced PSA sheet, each having a PSA layer E.
The PSA layer E had a 73.6 % solvent-insoluble portion.

(Example 8)

One of the release films A was removed from the substrate-free PSA sheet fabricated in Example 7, and a substrate B was adhered to the exposed adhesive surface to fabricate a substrate-backed single-faced PA sheet.

This substrate-backed single-faced PSA sheet has a layered construction in order of release film A/PSA layer E/substrate B.

(Comparative Example 1)

Using PSA composition F in place of PSA composition A, in the same manner as Example 1, were fabricated a substrate-free double-faced PSA sheet and a substrate-backed single-faced PSA sheet, each having a PSA layer F. The PSA layer F had a 72.2 % solvent-insoluble portion.

(Comparative Example 2)

Using PSA composition G in place of PSA composition A, in the same manner as Example 1, were fabricated a substrate-free double-faced PSA sheet and a substrate-backed single-faced PSA sheet, each having a PSA layer G The PSA layer G had a 74.5 % solvent-insoluble portion.

(Comparative Example 3)

In the same manner as Example 1 except that PSA composition H was used in place of PSA composition A and that the PSA layer was formed to have a thickness of 100 μm after cured, were fabricated a substrate-free double-faced PSA sheet and a substrate-backed single-faced PSA sheet, each having a PSA layer H.
The PSA layer H had a 80.6 % solvent-insoluble portion.

(Comparative Example 4)

In the same manner as Example 1 except that PSA composition I was used in place of PSA composition A and that the PSA layer was formed to have a thickness of 100 μm after cured, were fabricated a substrate-free double-faced PSA sheet and a substrate-backed single-faced PSA sheet, each having a PSA layer I.
The PSA layer I had a 69.6 % solvent-insoluble portion.

(Comparative Example 5)

In the same manner as Example 1 except that PSA composition J was used in place of PSA composition A and that the PSA layer was formed to have a thickness of 100 μm after cured, were fabricated a substrate-free double-faced PSA sheet and a substrate-backed single-faced PSA sheet, each having a PSA layer J.
The PSA layer J had a 78.4 % solvent-insoluble portion.

(Evaluations)

With respect to Examples and Comparative Examples, the adhesive strength to metal surfaces, thermal releasability, and metal corrosivity were evaluated. The results are shown in Table 3.

<Adhesive strength to metal surfaces>

The respective substrate-backed PSA sheets fabricated in Examples and Comparative Examples were cut into 20 mm wide by 100 mm long sheets to prepare measurement samples.
Subsequently, the release film A was removed from each measurement sample, and the exposed adhesive face was pressure-bonded to a 0.1 mm thick copper plate with a 2 kg roller moved back and forth once. The copper plate had been pre-cleaned by rubbing the surface back and forth 10 times with a wiping cloth wet with isopropanol. The resultant was aged at 23 °C for half an hour.
After aged, in an atmosphere at 23 °C, using a tensile tester (system name "TG-1kN" available from Minebea Co., Ltd.), the substrate-backed single-faced PSA sheet was peeled away from the copper plate at a peel rate of 300 mm/min and a peel angle of 180° to determine the 180° peel strength (N/20mm) as the adhesive strength to metal surfaces.

<Thermal releasability>

The respective substrate-backed PSA sheets fabricated in Examples and Comparative Examples were cut into 20 mm by 20 mm square sheets to prepare measurement samples.
Subsequently, the release film A was removed from each measurement sample, and the exposed adhesive face was

pressure-bonded to a 0.1 mm thick copper plate with a 2 kg roller moved back and forth once. The copper plate had been pre-cleaned by rubbing the surface back and forth 10 times with a wiping cloth wet with isopropanol. The same procedure was repeated with another measurement sample for each example.
One measurement sample was aged in an atmosphere at 23 °C for half an hour and the other sample was aged in an atmosphere at 60 °C and 95 % RH for 168 hours (7 days) for evaluation of the thermal releasability.
While keeping the measurement samples adhered on the copper plates, they were placed in a hot-air dryer and heated at 145 °C for four minutes.
The same procedure was repeated using a 0.1 mm thick iron plate in place of the copper plate. After the heating was completed, the state of each measurement sample was observed and the thermal releasability was evaluated based on the following grades:

Excellent (E): the measurement sample peeled itself off the copper plate (or the iron plate).
Good (G): the measurement sample was easily peeled away from the copper plate (or the iron plate).
Poor (P): the measurement sample could not be easily peeled away from the copper plate (or the iron plate).

<Metal corrosivity>

The respective substrate-backed PSA sheets fabricated in Examples and Comparative Examples were cut into 20 mm by 20 mm square sheets to prepare measurement samples.
Subsequently, the release film A was removed from each measurement sample, and the exposed adhesive face was pressure-bonded to a 0.1 mm thick copper plate with a 2 kg roller moved back and forth once. The copper plate had been pre-cleaned by rubbing the surface back and forth 10 times with a wiping cloth wet with isopropanol. The same procedure was repeated with another measurement sample for each example.
One measurement sample was aged in an atmosphere for 48 hours and the other measurement sample was aged for 168 hours (7 days) in an atmosphere at 60 °C and 95 % RH.
Subsequently, from the substrate side, the surface of the copper plate was visually observed and the corrosivity was evaluated based on the following grades:

Non-corrosive (NC): no discoloration was observed on the copper plate surface.
Corrosive (C): some discoloration was observed on the copper plate surface.

[Table 3]

| | | PSA layer containing a thermally expandable microsphere | | | | | Removability with heat | | | Metal corrosivity | |
|---|---|---|---|---|---|---|---|---|---|---|---|
| | | | | | | | copper plate | | iron plate | copper plate | |
| | Substrate | Composition (mass%) | # of equivalentof carboxylic acid (eq./g) | # of equivalentof amine (eq./g) | Thickness (μm) | Adhesivenessto metal (N/20mm) | 23°C 0.5 h | 60°C, 95%RH 168 h | 23°C 0.5 h | 60°C, 95%RH 48 h | 60°C, 95%RH 168 h |
| Ex.1 | A | 2EHA/NVC/ IBXA 70/20/10 | 0 | 0.0202 | 50 | 13.5 | E | G | E | NC | NC |
| Ex.2 | B | 2EHA/NVC/ IBXA 70/20/10 | 0 | 0.0202 | 50 | 14.9 | E | E | E | NC | NC |
| Ex.3 | A | 2EHA/DMAA/ IBXA 60/30/10 | 0 | 0.0423 | 100 | 13.0 | E | G | E | NC | NC |
| Ex.4 | A | 2EHA/NVC/t-BA 70/20/10 | 0 | 0.0202 | 100 | 14.1 | E | E | E | NC | NC |
| Ex.5 | A | LA/NVP/IBXA 70/20/10 | 0 | 0.0252 | 100 | 12.0 | E | E | E | NC | NC |
| Ex.6 | B | LA/NVP/IBXA 70/20/10 | 0 | 0.0252 | 100 | 13.1 | E | E | E | NC | NC |
| Ex.7 | A | 2EHA/NVP/ IBXA 70/20/10 | 0 | 0.0252 | 100 | 14.2 | E | G | E | NC | NC |
| Ex.8 | B | 2EHA/NVP/ IBXA 70/20/10 | 0 | 0.0252 | 100 | 16.1 | E | E | E | NC | NC |
| | | 2EHA/AA | | | | | | | | | |

(continued)

| | | PSA layer containing a thermally expandable microsphere | | | | | Removability with heat | | | Metal corrosivity | |
|---|---|---|---|---|---|---|---|---|---|---|---|
| | | | | | | | copper plate | | iron plate | copper plate | |
| | Substrate | Composition (mass%) | # of equivalentof carboxylic acid (eq./g) | # of equivalentof amine (eq./g) | Thickness (μm) | Adhesivenessto metal (N/20mm) | 23°C 0.5 h | 60°C, 95%RH 168 h | 23°C 0.5 h | 60°C, 95%RH 48 h | 60°C, 95%RH 168 h |
| Comp. Ex. 1 | A | 75/25 | 0.156 | 0 | 50 | 0.8 | E | E | E | C | C |
| Comp. Ex. 2 | A | 2EHA/AA 90/10 | 0.063 | 0 | 50 | 8.5 | E | E | E | C | C |
| Comp. Ex. 3 | A | 2EHA/NVC/ IBXA/AA 70/20/9.5/0.5 | 0.003 | 0.0202 | 100 | 14.4 | G | G | E | C | C |
| Comp. Ex. 4 | A | 2EHA/NVC/ IBXA 80/3/17 | 0 | 0.0030 | 100 | 9.8 | E | E | E | NC | NC |
| Comp. Ex. 5 | A | 2EHA/NVC/ IBXA 30/60/10 | 0 | 0.0606 | 100 | 0.1 | E | E | E | NC | NC |

All Examples exhibited good adhesion to a metal adherend. They all exhibited good releasability from both the copper plate and the iron plate, and were able to be removed (released) easily with heat. They showed no metal corrosivity even under a hot-humid condition.

On the other hand, Comparative Examples 1 to 3 each using an acrylic polymer having a higher number of equivalence of carboxylic acid all resulted in metal corrosion, Comparative Example 4 using an acrylic polymer having too low an amine equivalent weight was found to exhibit inferior adhesion to metal surfaces while Comparative Example 5 using an acrylic polymer having too high an amine equivalent weight was found to exhibit poor adhesion to metal surfaces.

## Claims

1. A metal surface protective pressure-sensitive adhesive sheet comprising a substrate and an acrylic pressure-sensitive adhesive layer provided on at least one face of the substrate,
wherein the acrylic pressure-sensitive adhesive layer comprises an acrylic polymer and a thermally expandable microsphere, and
the acrylic polymer has a carboxylic acid equivalent weight of 0.0010 eq./g or less and an amine equivalent weight of 0.0050 eq./g to 0.0600 eq./g.

2. The metal surface protective pressure-sensitive adhesive sheet according to Claim 1, wherein the acrylic pressure-sensitive adhesive layer comprises the thermally expendable microsphere at 10 parts by mass to 200 parts by mass relative to 100 parts by mass of the acrylic polymer.

3. The metal surface protective pressure-sensitive adhesive sheet according to Claim 1 or 2, wherein the acrylic polymer comprise as a constituent:

   a monomer (a1) at a proportion of 40 % by mass to 90 % by mass, with the monomer (a1) being an atkyl (meth) acrylate monomer having an alkyl group with 4 to 12 carbon atoms and having a homopolymer glass transition temperature below 0 °C;
   a monomer (a2) at a proportion of 5 % by mass to 40 % by mass, with the monomer (a2) being a monomer having at least one nitrogen atom and one ethylenically unsaturated bond per molecule; and
   a monomer (a3) at a proportion of 0% by mass to 40 % by mass, with the monomer (a3) being a monomer having one ethylenically unsaturated bond per molecule and having a homopolymer glass transition temperature of 0 °C or above, and
   wherein the proportions indicate the fractions (% by mass) of the monomers (a1), (a2) and (a3) in the total amount (100% by mass) of the monomers (a1), (a2) and (a3).

4. The metal surface protective pressure-sensitive adhesive sheet according to Claim 3, wherein the monomer (a2) is at least one monomer selected from a group consisting of N,N-dimethylacrylamide, N-vitiyl-2-pyrrolidone and N-vinyl-2-caprolactam.

5. The metal surface protective pressure-sensitive adhesive sheet according to Claim 3 or 4, wherein the monomer (a3) is a (meth)acrylate monomer having a structure in which a (meth)acryloyloxy group is bonded to a tertiary carbon atom and having a homopolymer glass transition temperature of 0 °C or above, or a (meth)acrylate monomer having a structure in which a (meth)acryloyloxy group is bonded to a carbon atom constituting a monocyclic or polycyclic aliphatic hydrocarbon ring and having a homopolymer glass transition temperature of 0 °C or above.

6. The metal surface protective pressure-sensitive adhesive sheet according to any one of Claims 3 to 5, wherein the monomer (a3) is at least one monomer selected from a group consisting oft-butyl (meth)acrylate and isobomyl (meth)acrylate.

7. The metal surface protective pressure-sensitive adhesive sheet according to any one of Claims I to 6, wherein the substrate is a thermally shrinkable film that shrinks by 5 % or more at a tempemture in a range of 70 °C to 180 °C.

Europäisches Patentamt
European Patent Office
Office européen des brevets

# EUROPEAN SEARCH REPORT

Application Number
EP 13 16 6578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 086 088 A (KITANO SHUICHI [JP] ET AL) 4 February 1992 (1992-02-04)<br>* column 1, lines 15-30 *<br>* column 6, lines 12-46 *<br>* column 9, lines 5-20; claims; examples *<br>----- | 1-7 | INV.<br>C09J7/02<br>C09J133/12 |
| X | EP 0 419 020 A1 (MINNESOTA MINING & MFG [US]) 27 March 1991 (1991-03-27)<br>* claims; examples *<br>----- | 1,3,4,7 | |
| A | US 2003/215630 A1 (MELANCON KURT C [US] ET AL) 20 November 2003 (2003-11-20)<br>* the whole document *<br>----- | 1-7 | |

TECHNICAL FIELDS SEARCHED (IPC)

C09J

The present search report has been drawn up for all claims

1

| Place of search | Date of completion of the search | Examiner |
|---|---|---|
| Munich | 19 July 2013 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 16 6578

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2013

| Patent document cited in search report | | Publication date | Patent family member(s) | | | Publication date |
|---|---|---|---|---|---|---|
| US 5086088 | A | 04-02-1992 | NONE | | | |
| EP 0419020 | A1 | 27-03-1991 | AU | 627607 | B2 | 27-08-1992 |
| | | | AU | 5989690 | A | 21-03-1991 |
| | | | CA | 2021958 | A1 | 19-03-1991 |
| | | | DE | 69016330 | D1 | 09-03-1995 |
| | | | DE | 69016330 | T2 | 03-08-1995 |
| | | | EP | 0419020 | A1 | 27-03-1991 |
| | | | JP | H03111473 | A | 13-05-1991 |
| | | | US | 4994322 | A | 19-02-1991 |
| US 2003215630 | A1 | 20-11-2003 | AU | 2003230867 | A1 | 12-12-2003 |
| | | | US | 2003215630 | A1 | 20-11-2003 |
| | | | WO | 03099954 | A2 | 04-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012108114 A
- JP H543851 B
- JP H6306337 B


### Non-patent literature cited in the description


- Polymer Handbook. John Wiley & Sons, Inc, 1989